# EUROPEAN PATENT APPLICATION

(11) **EP 4 769 726 A1**
(43) Date of publication of application: **01.07.2026**
(21) Application number: 25822420.3
(22) Date of filing: 24.01.2025
(51) Int. Cl.: H01M 50/244, H01M 50/291, H01M 50/249

(54) **BATTERY PACK AND VEHICLE COMPRISING SAME**

(30) Priority: 12.06.2024 KR 20240076632
(71) Applicant: LG Energy Solution, Ltd., Seoul 07335 (KR)
(72) Inventor: PARK, Jong-Sun, Daejeon 34122 (KR); AHN, Jun-Young, Daejeon 34122 (KR); LEE, Yong-Ho, Daejeon 34122 (KR); JEONG, Eui-Cheol, Daejeon 34122 (KR); JUNG, In-Hyuk, Daejeon 34122 (KR); CHUNG, Jae-Hun, Daejeon 34122 (KR); JO, Yong-Hyuck, Daejeon 34122 (KR); YANG, Jin-Oh, Daejeon 34122 (KR)
(74) Representative: Plasseraud IP
(86) International application number: PCT/KR2025/001544
(87) International publication number: WO 2025/258787

(57) **Abstract**

A battery pack according to the present disclosure includes a first cell array structure having a plurality of battery cells; a second cell array structure stacked on one side of the first cell array structure and having a plurality of battery cells; and a stacking guide unit configured to guide a stacking structure of the first cell array structure and the second cell array structure, wherein the stacking guide unit includes: a middle guide unit disposed between the first cell array structure and the second cell array structure; and a side guide unit configured to at least partially cover sides of the first cell array structure and the second cell array structure and connected to the middle guide unit.

## Description

### TECHNICAL FIELD

The present disclosure relates to a battery pack and a vehicle including the same and, more specifically, to a battery pack in which a plurality of cell array structures can be structurally stably and robustly stacked, and a vehicle including the same.

This application is based on and claims priority from Korean Patent Application No. 10-2024-0076632, filed on June 12, 2024, with the Korean Intellectual Property Office, the disclosure of which is incorporated herein in its entirety by reference.

### BACKGROUND ART

Recently, the demand for portable electronic products such as laptops, video cameras, and mobile phones has rapidly increased, and the development of electric vehicles, energy storage batteries, robots, satellites, and the like has been accelerated, so in line with this, active researches on high-performance secondary batteries capable of being repeated charged and discharged are underway.

Currently commercialized secondary batteries include nickel-cadmium batteries, nickel-hydrogen batteries, nickel-zinc batteries, and lithium-ion secondary batteries. Among these, lithium-ion secondary batteries are in the spotlight for their advantages of flexible charging and discharging due to almost no memory effect, a very low self-discharge rate, and a high energy density, compared to nickel-based secondary batteries.

These lithium-ion secondary batteries generally use lithium-based oxides and carbon materials as positive and negative electrode active materials, respectively. In addition, the lithium secondary batteries includes an electrode assembly in which the positive and negative electrode plates coated with the positive and negative electrode active materials, respectively, are disposed with a separator therebetween, and an exterior case that stores the electrode assembly with an electrolyte in a sealing manner.

Meanwhile, lithium-ion secondary batteries may be classified, depending on the shape of a battery case, into pouch-type secondary batteries in which the electrode assembly is stored in a pouch of an aluminum laminate sheet and can-type secondary batteries in which the electrode assembly is stored in a metal can. In addition, can-type secondary batteries may be further classified into cylindrical batteries and prismatic batteries depending on the shape of the metal can. In order to provide high voltage and current, these lithium-ion secondary batteries are assembled into a dense structure by stacking multiple battery cells to overlap each other with or without cartridges, and then electrically connected into a battery module or battery pack.

These days, research and development is actively being conducted on battery packs configured as a single module or cell assembly with improved structural rigidity by densely stacking multiple cylindrical battery cells to stand, and a pack frame that surrounds them. In particular, the size of a single module or cell assembly is on the increase in order to increase energy capacity.

Therefore, there is an urgent need for the development of a battery pack in which a single module or cell assembly with an increased size may be structurally stably and firmly disposed in a pack frame.

### DISCLOSURE

### Technical Problem

The present disclosure is designed to solve the problems of the related art, and therefore the present disclosure is directed to providing a battery pack in which a first cell array structure and a second cell array structure are stably and firmly stacked, and a vehicle including the same.

In addition, the present disclosure is to provide a battery pack with enhanced rigidity and a vehicle including the same.

In addition, the present disclosure is to provide a battery pack capable of effectively preventing a thermal propagation phenomenon, and a vehicle including the same.

In addition, the present disclosure is to provide a lightweight battery pack, and a vehicle including the same.

In addition, the present disclosure is to provide a battery pack with improved assembly efficiency, and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a first cell array structure having a plurality of battery cells; a second cell array structure stacked on one side of the first cell array structure and having a plurality of battery cells; and a stacking guide unit configured to guide a stacking structure of the first cell array structure and the second cell array structure, wherein the stacking guide unit may include: a middle guide unit disposed between the first cell array structure and the second cell array structure; and a side guide unit configured to at least partially cover sides of the first cell array structure and the second cell array structure and connected to the middle guide unit.

A plurality of middle guide units may be provided.

The middle guide unit may have at least one protrusion protruding toward the second cell array structure so as to support the second cell array structure.

The second cell array structure may include at least one side structure configured to support and store the plurality of battery cells, and the protrusion may support the side structure.

The battery pack according to the present disclosure may further include a pad disposed between the protrusion and the second cell array structure.

In the battery pack according to the present disclosure, the second cell array structure and the first cell array structure may be spaced apart from each other by the middle guide unit to form a venting space.

The middle guide unit may have at least one through-hole open toward the first cell array structure and the second cell array structure.

The middle guide unit may include: at least one protrusion protruding toward the second cell array structure to support the second cell array structure; and at least one through-hole open toward the first cell array structure and the second cell array structure, and the protrusion and the through-hole may be disposed alternately with each other.

The battery pack according to the present disclosure may further include an insulating member disposed between the first cell array structure and the middle guide unit.

The side guide unit may be bolted to the first cell array structure and the second cell array structure by a first bolt.

The side guide unit may extend in a direction perpendicular to a stacking direction of the first cell array structure and the second cell array structure, and the side guide unit may have a forming portion extending along a longitudinal direction of the side guide unit to be recessed so as to receive at least an end of the middle guide unit.

The middle guide unit and the side guide unit may be bolted to each other by a second bolt.

The second bolt may be a weld bolt welded to the middle guide unit.

The battery pack according to the present disclosure may further comprising: a pack case having a storage space formed to store the first cell array structure, the second cell array structure, and the stacking guide unit; and a cross-beam coupled to the pack case so as to partition the storage space, and the side guide unit may be coupled to the cross-beam.

The side guide unit may include: a first mounting bracket coupled to the cross-beam and disposed to a side of the first cell array structure; and a second mounting bracket coupled to the cross-beam and disposed to a side of the second cell array structure, and the first mounting bracket and the second mounting bracket may be disposed to be staggered when viewed from a stacking direction of the first cell array structure and the second cell array structure.

The side guide unit may include: a first side guide unit disposed to a side of the middle guide unit; and a second side guide unit stacked on the first side guide unit on the opposite side of the middle guide unit relative to the first side guide unit.

In another aspect of the present disclosure, there is provided a vehicle including at least one battery pack according to the present disclosure.

### Advantageous Effects

According to the present disclosure, it is possible to provide a battery pack in which a first cell array structure and a second cell array structure are stably and firmly stacked by including a stacking guide unit, and a vehicle including the same.

In addition, it is possible to provide a battery pack with enhanced rigidity by a stacking guide unit, and a vehicle including the same.

In addition, the present disclosure is to provide a battery pack capable of effectively preventing a thermal propagation phenomenon by a stacking guide unit, and a vehicle including the same.

In addition, the present disclosure is to provide a lightweight battery pack by a stacking guide unit, and a vehicle including the same.

In addition, the present disclosure is to provide a battery pack with improved assembly efficiency by a stacking guide unit, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of the battery pack in FIG. 1.
FIG. 3 is an exploded perspective view of a cell array structure assembly in a battery pack according to an embodiment of the present disclosure.
FIG. 4 is an exploded perspective view of a stacking guide unit in a battery pack according to an embodiment of the present disclosure.
FIG. 5 is a cross-sectional view of a cell array structure assembly in a battery pack according to an embodiment of the present disclosure.
FIG. 6 is a perspective view illustrating one side structure of a second cell array structure and a stacking guide unit in a battery pack according to an embodiment of the present disclosure.
FIG. 7 is an exploded perspective view of a cell array structure assembly in a battery pack according to a modification of an embodiment of the present disclosure.
FIG. 8 is a perspective view illustrating a first bolt fastened to a cell array structure assembly in a battery pack according to an embodiment of the present disclosure.
FIG. 9 is an enlarged cross-sectional view of a portion of a side wall to which a first bolt is fastened in a battery pack according to an embodiment of the present disclosure.
FIG. 10 is a front view illustrating a stacking guide unit in a battery pack according to an embodiment of the present disclosure.
FIG. 11 is an exploded and enlarged perspective view illustrating a portion of a stacking guide unit in a battery pack according to an embodiment of the present disclosure.
FIG. 12 is an enlarged cross-sectional view illustrating a portion of a stacking guide unit in a battery pack according to an embodiment of the present disclosure.
FIG. 13 is a plan view illustrating a cell array structure assembly coupled to a cross-beam in a battery pack according to an embodiment of the present disclosure.
FIG. 14 is an enlarged front view illustrating a portion of a stacking guide unit in a battery pack according to another embodiment of the present disclosure.
FIG. 15 is an enlarged perspective view illustrating a stacking guide unit in a battery pack according to another embodiment of the present disclosure.
FIG. 16 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

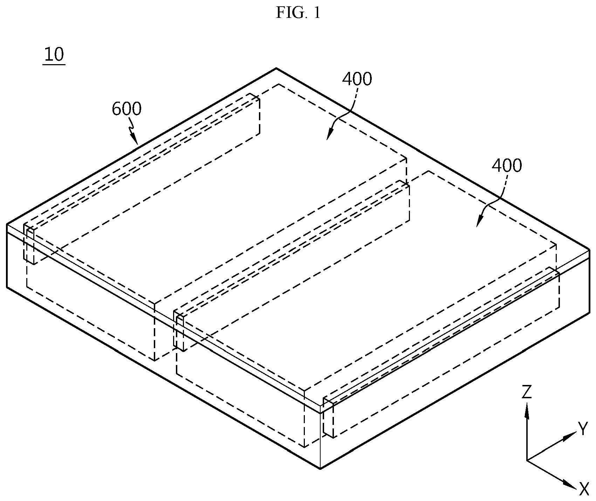

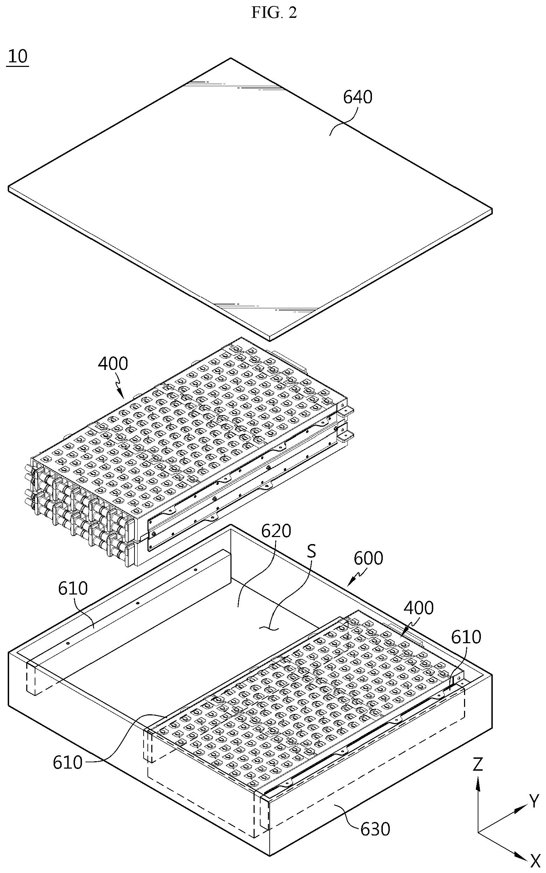

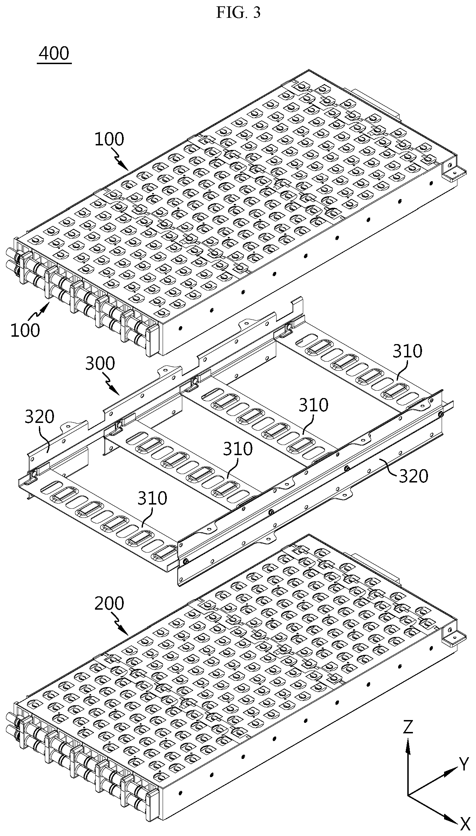

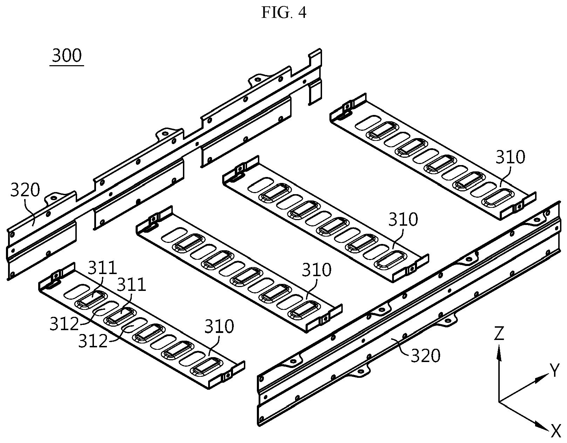

FIG. 1 is a perspective view of a battery pack according to an embodiment of the present disclosure, FIG. 2 is an exploded perspective view of the battery pack in FIG. 1, FIG. 3 is an exploded perspective view of a cell array structure assembly in a battery pack according to an embodiment of the present disclosure, and FIG. 4 is an exploded perspective view of a stacking guide unit in a battery pack according to an embodiment of the present disclosure.

Hereinafter, a battery pack 10 according to an embodiment of the present disclosure will be described in detail with reference to FIGS. 1 to 4. The battery pack 10 according to an embodiment of the present disclosure may include a first cell array structure 100, a second cell array structure 200, and a stacking guide unit 300.

The battery pack 10 may be configured in a three-dimensional structure having a predetermined length, width, and height in the X, Y, and Z directions, respectively. The battery pack 10 may have a structure suitable for mounting on a vehicle body.

The first cell array structure 100 may have a plurality of battery cells 110. The battery cell 110 is a secondary battery, and may be configured as a cylindrical secondary battery, a pouch-type secondary battery, or a prismatic secondary battery. Hereinafter, although the plurality of battery cells 110 will be described as being configured as cylindrical secondary batteries in the present embodiment, the disclosure is not limited thereto, and it is obvious that a pouch-type secondary battery or a prismatic secondary battery may be applied to the battery cell 110.

In the first cell array structure 100, the plurality of battery cells 110 may be arranged in a horizontal direction parallel to the X-Y plane and perpendicular to the Z direction. The first cell array structure 100 may be understood as a single assembly or structure in which a plurality of battery cells 110 are arranged as described above.

The second cell array structure 200 may have a plurality of battery cells 110. The battery cells 110 of the second cell array structure 200 may be configured and arranged in the same manner as the battery cells 110 of the first cell array structure 100.

The second cell array structure 200 may be stacked on one side of the first cell array structure 100. For example, the second cell array structure 200 may be stacked to the side in the +Z direction or on the top of the first cell array structure 100.

The battery pack 10 including the first cell array structure 100 and the second cell array structure 200 may be configured in a so-called cell-to-pack structure without including a separate module case, thereby increasing space efficiency and improving energy density. The first cell array structure 100 and the second cell array structure 200 may be configured to have a large area by increasing the number of battery cells 110 arranged therein.

The stacking guide unit 300 may be a configuration that guides the stacking of the first cell array structure 100 and the second cell array structure 200. The stacking guide unit 300 may be equipped with a middle guide unit 310 and a side guide unit 320.

The middle guide unit 310 may be disposed between the first cell array structure 100 and the second cell array structure 200. Based on the middle guide unit 310, the first cell array structure 100 may be disposed to the side in the -Z direction or at the bottom of the middle guide unit 310. Based on the middle guide unit 310, the second cell array structure 200 may be disposed to the side in the +Z direction or on the top of the middle guide unit 310.

The first cell array structure 100 and the second cell array structure 200 may be spaced apart from each other by the middle guide unit 310. The middle guide unit 310 may support the first cell array structure 100 and the second cell array structure 200 in the Z direction or in the up-down direction. For example, the middle guide unit 310 may support the second cell array structure 200 downward or in the -Z direction, and support the first cell array structure 100 upward or in the +Z direction.

The side guide unit 320 may at least partially cover sides of the first cell array structure 100 and the second cell array structure 200. The side guide unit 320 may at least partially support the sides of the first cell array structure 100 and the second cell array structure 200, and may prevent the first cell array structure 100 and the second cell array structure 200 from being separated from the stacking guide unit 300.

The sides described above may be understood as, for example, the side in the +X direction and the side in the -X direction. One side guide unit 320 may cover both a portion of the side of the first array structure and a portion of the side of the second cell array structure 200. For example, one side guide unit 320 may cover both a portion of the side of the first cell array structure 100 in the +Z direction and a portion of the side of the second cell array structure 200 in the -Z direction.

The side guide unit 320 may be disposed on both sides of the first cell array structure 100 and the second cell array structure 200. For example, the side guide unit 320 may be disposed on both sides of the first cell array structure 100 and the second cell array structure 200 in the +X direction and the -X direction.

The side guide unit 320 may be connected to the middle guide unit 310. The side guide unit 320 may be connected to both sides of the middle guide unit 310, respectively. For example, the side guide unit 320 may be connected to each end of the middle guide unit 310 in the +X direction and the -X direction.

The first cell array structure 100 and the second cell array structure 200 of the battery pack 10 according to the present disclosure may be stably and firmly supported in the Z direction or the up-down direction while remaining in a spaced state by the middle guide unit 310. In addition, the first cell array structure 100 and the second cell array structure 200 may be stably and firmly supported in the X direction or the left-right direction by the side guide unit 320. Therefore, in the battery pack 10 according to the present disclosure, the first cell array structure 100 and the second cell array structure 200 may be stably and firmly stacked by the stacking guide unit 300.

The middle guide unit 310 may extend in a direction perpendicular to the stacking direction of the first cell array structure 100 and the second cell array structure 200. In addition, the side guide unit 320 may extend in a direction perpendicular to the stacking direction of the first cell array structure 100 and the second cell array structure 200 and the length direction of the middle guide unit 310, respectively. For example, the first cell array structure 100 and the second cell array structure 200 may be stacked in the Z direction, the middle guide unit 310 may extend in the X direction, and the side guide unit 320 may extend in the Y direction. In this case, the middle guide unit 310 may have a width in the Y direction, and the side guide unit 320 may have a width in the Z direction. Therefore, the stacking guide unit 300 may be configured in an "H" shape when viewed from the Y direction.

Meanwhile, each of the first cell array structure 100 and the second cell array structure 200 may have a predetermined width, length, and height. The widths, lengths, and heights of the first cell array structure 100 and the second cell array structure 200 may be formed in the X direction, the Y direction, and the Z direction, respectively.

The first cell array structure 100, the second cell array structure 200, and the stacking guide unit 300 may be assembled into a cell array structure assembly 400. The battery pack 10 according to the present disclosure may include at least one cell array structure assembly 400.

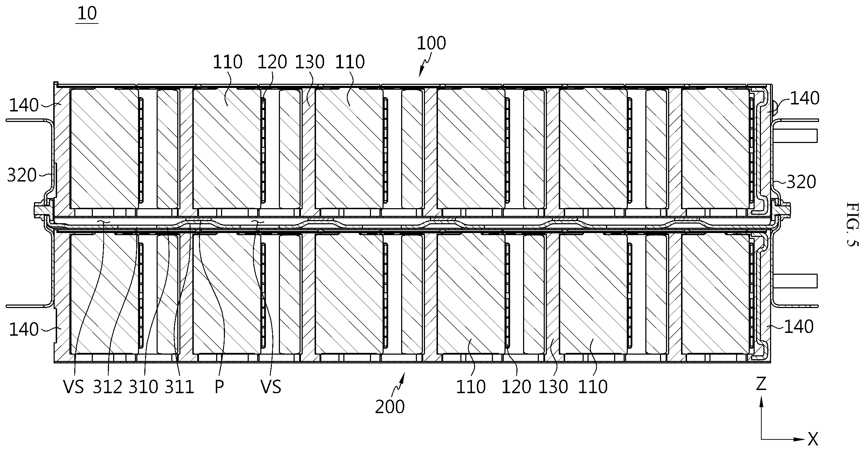

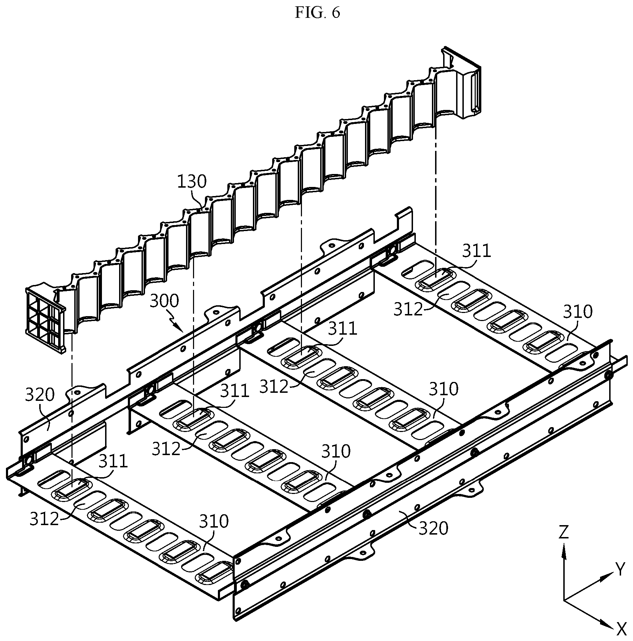

FIG. 5 is a cross-sectional view of a cell array structure assembly in a battery pack according to an embodiment of the present disclosure, and FIG. 6 is a perspective view illustrating a side structure of a second cell array structure and a stacking guide unit in a battery pack according to an embodiment of the present disclosure.

Hereinafter, the stacking guide unit 300 of the battery pack 10 according to an embodiment of the present disclosure will be described in more detail with further reference to FIG. 5 and FIG. 6.

A plurality of middle guide units 310 may be provided. The multiple middle guide units 310 may be disposed to be spaced apart from each other. The multiple middle guide units 310 may be spaced apart along the width direction of the middle guide unit 310. For example, in the case where the middle guide unit 310 has a width in the Y direction, the plurality of middle guide units 310 may be disposed to be spaced apart from each other along the Y direction.

When a plurality of middle guide units 310 are provided, the first cell array structure 100 and the second cell array structure 200 may be supported at various positions, so that the first cell array structure 100 and the second cell array structure 200 may be stacked more stably and firmly.

The middle guide unit 310 may be provided with at least one protrusion 311. The protrusion 311 may be formed to protrude toward the second cell array structure 200. The protrusion 311 may face the second cell array structure 200. For example, the protrusion 311 may protrude toward the +Z direction and come into contact with the bottom of the second cell array structure 200. The protrusion 311 may support the second cell array structure 200. Since the middle guide unit 310 has at least one protrusion 311, the second cell array structure 200 may be supported more firmly and stably by the protrusion 311, so that the overall rigidity of the battery pack 10 may be strengthened.

As described above, the first cell array structure 100 and the second cell array structure 200 may be spaced apart from each other by the middle guide unit 310. Since the middle guide unit 310 has the protrusion 311, the first cell array structure 100 and the second cell array structure 200 may be spaced more reliably. In this case, the gap between the first cell array structure 100 and the second cell array structure 200 may be configured at least equal to or greater than the protruding height of the protrusion 311. Therefore, by adjusting the protruding height of the protrusion 311, the gap between the first cell array structure 100 and the second cell array structure 200 may be adjusted.

The second cell array structure 200 may have at least one side structure 120. The side structure 120 may be configured to support and store a plurality of battery cells 110. Specifically, in the second cell array structure 200, a plurality of battery cells 110 may be arranged in a row (hereinafter, referred to as a battery cell 110 row) along one direction, and the side structure 120 may be disposed between two battery cell 110 rows to support and store each battery cell 110 row on both sides. The side structure 120 may extend along the one direction. For example, the plurality of battery cells 110 may be arranged in a row along the Y direction in the second cell array structure 200, and the side structure 120 may extend along the Y direction. The first cell array structure 100 may have the same side structure 120 as the side structure 120 of the second cell array structure 200.

The protrusion 311 may support the side structure 120 of the second cell array structure 200. The protrusion 311 may support the bottom of the side structure 120 of the second cell array structure 200 upward or in the +Z direction. The protrusion 311 may be provided at a position corresponding to the side structure 120 of the second cell array structure 200. For example, the protrusion 311 may be provided at at least one of the positions where the side structure 120 and the middle guide unit 310 overlap when viewed from the Z direction.

The battery pack 10 according to an embodiment of the present disclosure may further include a pad P. The pad P may be disposed between the protrusion 311 and the second cell array structure 200. In the case where the protrusion 311 supports the side structure 120 of the second cell array structure 200, the pad P may be disposed between the protrusion 311 and the side structure 120.

The pad P may reduce or fill the gap between the protrusion 311 and the second cell array structure 200. The pad P may dampen vibration or impact transmitted between the protrusion 311 and the second cell array structure 200. The pad P may reduce noise that may occur between the protrusion 311 and the second cell array structure 200, and may improve the durability of the battery pack 10.

The pad P may include a polyurethane material. The polyurethane material is a type of plastic, and has the advantages of being strong, elastic, and having high tensile strength. In addition, the polyurethane material is a material with excellent wear resistance, aging resistance, and oil resistance. Therefore, in the case where the pad P includes a polyurethane material, the pad P may more effectively reduce the gap between the protrusion 311 and the second cell array structure 200, and may more effectively dampen vibration or impact transmitted between the protrusion 311 and the second cell array structure 200.

The middle guide unit 310 may space the second cell array structure 200 and the first cell array structure 100 apart from each other to form a venting space VS. The venting space VS may be understood as a space through which venting gas, flame, or solid discharges released from the battery cell 110 when a thermal event occurs in the battery cell 110 flow.

In the battery pack 10 according to an embodiment of the present disclosure, since the venting space VS is formed between the first cell array structure 100 and the second cell array structure 200 by the middle guide unit 310, a thermal propagation phenomenon that may occur between the battery cells 110 may be effectively prevented.

The middle guide unit 310 may have at least one through-hole 312. The through-hole 312 may be formed to communicate with the first cell array structure 100 and the second cell array structure 200. The through-hole 312 may be formed to communicate between first cell array structure 100 and the second cell array structure 200.

When the through-hole 312 is provided in the middle guide unit 310, the middle guide unit 310 may be made lightweight while maintaining the rigidity of the middle guide unit 310. Therefore, the battery pack 10 may be made lightweight by the through-hole 312.

In addition, since the through-hole 312 communicates with the second cell array structure 200 and the first cell array structure 100, the thermal propagation phenomenon may be effectively prevented. Specifically, when a thermal event occurs in the second cell array structure 200 or the first cell array structure 100, the venting gas, flame, or solid discharges from the battery cell 110 may flow through the through-hole 312 into the space between the second cell array structure 200 and the first cell array structure 100, so that the thermal propagation phenomenon may be effectively prevented.

In the middle guide unit 310, the protrusions 311 and the through-holes 312 may be disposed alternately with each other. The protrusions 311 and the through-holes 312 may be disposed alternately along the longitudinal direction of the middle guide unit 310. For example, in the case where the middle guide unit 310 extends along the X direction, the protrusions 311 and the through-holes 312 may be disposed alternately along the X direction.

In the case where the protrusion 311 is provided at a position corresponding to the side structure 120 of the second cell array structure 200, the through-hole 312 may be provided at a position that does not correspond to the side structure 120 of the second cell array structure 200. For example, when viewed in the Z direction, the through-hole 312 may be provided at a position that does not overlap the side structure 120.

As described above, in the case where the protrusion 311 and the through-hole 312 are alternately disposed in the middle guide unit 310, there is an advantage in which the middle guide unit 310 may be more effectively maintained in rigidity while being lightweight. In addition, the middle guide unit 310 may support the second cell array structure 200 more evenly, and the battery cell 110 may be exposed more closely to the through-hole 312, so that the thermal propagation phenomenon may be prevented more effectively.

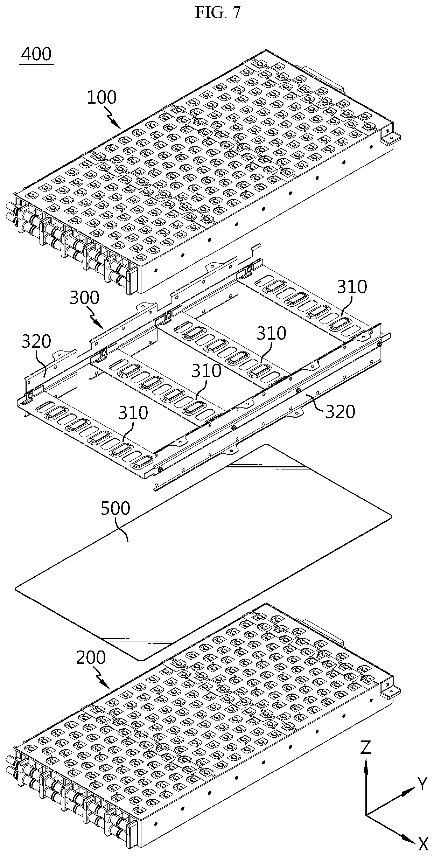

FIG. 7 is an exploded perspective view of a cell array structure assembly in a battery pack according to a modification of an embodiment of the present disclosure.

Hereinafter, a battery pack 10 according to a modification of an embodiment of the present disclosure will be described in detail with reference to FIG. 7.

The battery pack 10 according to a modification of an embodiment of the present disclosure may further include an insulating member 500 disposed between the first cell array structure 100 and the middle guide unit 310. The insulating member 500 may block flame or heat. The insulating member 500 may include a mica material. The insulating member 500 may be provided in the form of a sheet. The insulating member 500 may be disposed on the side of the first cell array structure 100 facing the +Z direction or on the top thereof. The insulating member 500 may cover the side of the first cell array structure 100 in the +Z direction or the top thereof.

In the case where the battery pack 10 further includes the insulating member 500, if a thermal event occurs in the battery pack 10, the venting gas, flame, or solid discharges generated from one of the first cell array structure 100 and the second cell array structure 200 may be effectively prevented from moving to the other cell array structures, so that the thermal propagation phenomenon may be prevented more effectively.

In the case where the middle guide unit 310 is provided with a through-hole 312, the second cell array structure 200 may be directly exposed to the insulating member 500 through the through-hole 312. As a result, when a thermal event occurs in the second cell array structure 200, the thermal propagation phenomenon may be prevented more effectively.

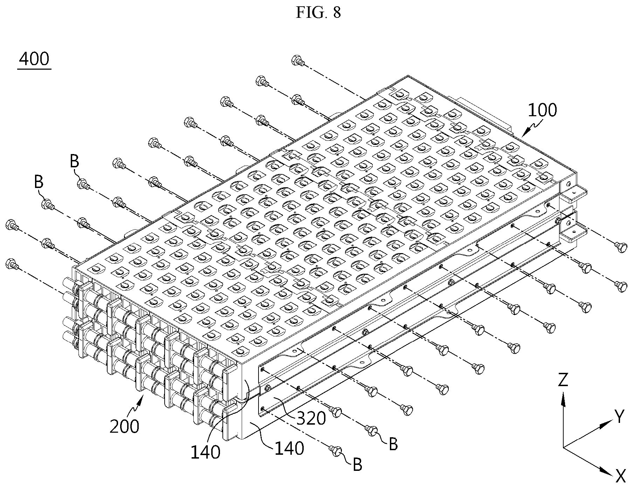

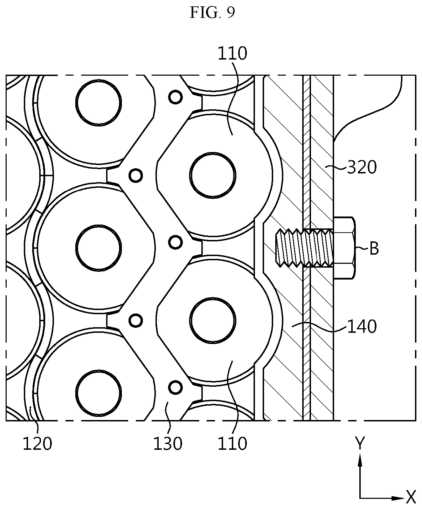

FIG. 8 is a perspective view illustrating a first bolt fastened to a cell array structure assembly in a battery pack according to an embodiment of the present disclosure, and FIG. 9 is an enlarged cross-sectional view of a portion of a side wall to which a first bolt is fastened in a battery pack according to an embodiment of the present disclosure.

Hereinafter, the stacking guide unit 300 according to an embodiment of the present disclosure will be described in more detail with reference to FIGS. 8 and 9.

The side guide unit 320 of the stacking guide unit 300 according to an embodiment of the present disclosure may be bolted to the first cell array structure 100 and the second cell array structure 200. The side guide unit 320 may be bolted to the first cell array structure 100 and the second cell array structure 200 by a first bolt B1.

A plurality of first bolts B1 may be provided, and some of the plurality of first bolts B1 may connect the side guide unit 320 and the first cell array structure 100, and the remaining first bolts may connect the side guide unit 320 and the second cell array structure 200. The first cell array structure 100 and the second cell array structure 200 may have a female thread formed therein by processing a tap hole so as to be engaged with the first bolt B1, respectively.

The first bolt B1 may be inserted into the first cell array structure 100 or the second cell array structure 200 by passing through the side guide unit 320 from the outside so as to be fastened thereto. Specifically, in the state where the first cell array structure 100 and the second cell array structure 200 are stacked while being guided by the stacking guide unit 300, the first bolt B1 may pass through the side guide unit 320 to be fastened to the first cell array structure 100 or the second cell array structure 200.

As described above, in the case where the side guide unit 320 is bolted to the first cell array structure 100 and the second cell array structure 200 by the first bolt B1, there is an advantage in which the side guide unit 320 may be firmly and robustly fixed to the first cell array structure 100 and the second cell array structure 200. In addition, the first bolt B1 may be fastened from the outside in a direction toward the first cell array structure 100 or the second cell array structure 200, so there is an advantage in which the assembly efficiency of the cell array structure assembly 400 may be improved.

Each of the first cell array structure 100 and the second cell array structure 200 may have at least one side wall 130. The side wall 130 may be configured to support and store a plurality of battery cells 110. Specifically, the side wall 130 may be configured to support and store the battery cell 110 row at the outermost sides of the first cell array structure 100 and the second cell array structure 200. The side wall 130 may extend along one direction. For example, the side wall 130 may be disposed at the outermost sides of the first cell array structure 100 and the second cell array structure 200 in the +X direction and the -X direction, and may extend along the Y direction.

The first bolt B1 may be fastened to the side wall 130 of each of the first cell array structure 100 and the second cell array structure 200. Specifically, a female thread to be engaged with the first bolt B1 may be formed in the side wall 130 by processing a tap hole. The first bolt B1 may be fastened to the side wall 130 between two battery cells 110. That is, the female thread to be engaged with the first bolt B1 may be formed in a portion of the side wall 130 between two battery cells 110. In this case, the depth at which the first bolt B1 is inserted into the side wall 130 may be maximized, so that the side guide unit 320 and the side wall 130 may be more firmly coupled.

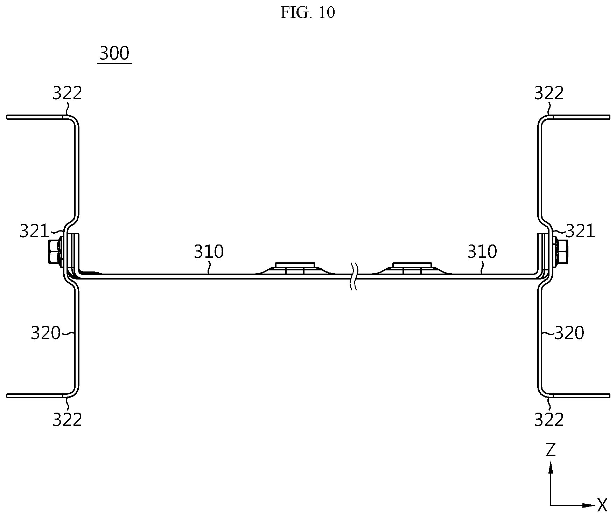

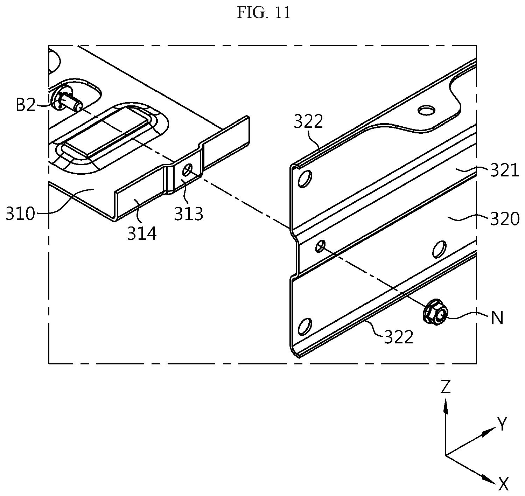

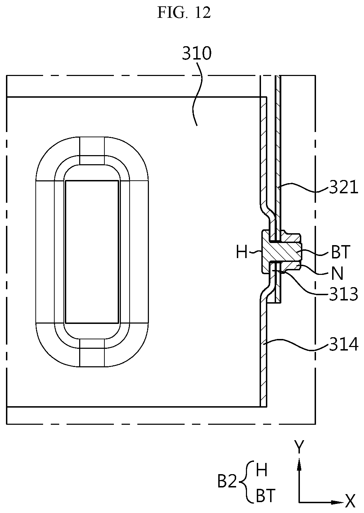

FIG. 10 is a front view illustrating a stacking guide unit in a battery pack according to an embodiment of the present disclosure, FIG. 11 is an exploded and enlarged perspective view illustrating a portion of a stacking guide unit in a battery pack according to an embodiment of the present disclosure, and FIG. 12 is an enlarged cross-sectional view illustrating a portion of a stacking guide unit in a battery pack according to an embodiment of the present disclosure.

Hereinafter, the stacking guide unit 300 according to an embodiment of the present disclosure will be described in more detail referring to FIG. 3 and FIGS. 10 to 12.

The side guide unit 320 may have a forming portion 321. The side guide unit 320 may extend in a direction perpendicular to the stacking direction of the first cell array structure 100 and the second cell array structure 200. For example, as described above, the first cell array structure 100 and the second cell array structure 200 may be stacked in the Z direction, and the side guide unit 320 may extend in the Y direction.

The forming portion 321 may extend in the longitudinal direction of the side guide unit 320 while being recessed. For example, the side guide unit 320 may extend in the Y direction, and the forming portion 321 may extend in the Y direction so as to be recessed. The forming portion 321 may be concavely recessed toward the middle guide unit 310. The forming portion 321 may receive at least an end of the middle guide unit 310. The forming portion 321 may receive an end of the middle guide unit 310 on the side facing the +X direction and/or the -X direction.

In the case where the forming portion 321 is provided in the side guide unit 320, the rigidity of the side guide unit 320 may be further reinforced. In addition, the middle guide unit 310 and the side guide unit 320 may be more firmly coupled to each other. Therefore, the overall rigidity of the battery pack 10 may be further reinforced.

Meanwhile, referring to FIG. 10, the side guide unit 320 may have a bent edge 322. The bent edge 322 may be provided on one end of the side guide unit 320 or the other end. Here, the one end may indicate the side facing the second cell array structure 200 or the +Z direction, and the other end may indicate the side facing the first cell array structure 100 or the -Z direction. The bent edge 322 may be formed to be bent in a direction away from the first cell array structure 100 and the second cell array structure 200. In the case where the side guide unit 320 is provided with the bent edge 322, the rigidity of the side guide unit 320 may be further reinforced.

The middle guide unit 310 and the side guide unit 320 may be bolted to each other by a second bolt B2. The second bolt B2 may pass sequentially through the middle guide unit 310 and the side guide unit 320, and may then be fastened to a nut N disposed on the outer side of the stacking guide unit 300, that is, on the side of the side guide unit 320.

In the case where the middle guide unit 310 and the side guide unit 320 are bolted to each other by the second bolt B2, the middle guide unit 310 and the side guide unit 320 may be more firmly joined.

The second bolt B2 may have a head H and a male thread BT. The head H may be disposed on the inner side of the stacking guide unit 300, that is, on the side of the middle guide unit 310. The male thread BT may be disposed on the outer side of the stacking guide unit 300, that is, on the side of the side guide unit 320, and may be engaged with the nut N.

The second bolt B2 may be a weld bolt. The weld bolt may be welded to the middle guide unit 310. The weld bolt may be understood as the second bolt B2 whose one end is welded to the middle guide. For example, the weld bolt may be understood as the second bolt B2 in which the male thread BT of the second bolt B2 passes through the middle guide unit 310 and in which the head H of the second bolt B2 is welded to the middle guide unit 310.

If the second bolt B2 is a weld bolt, the assembly process of the middle guide unit 310 and the side guide unit 320 may be facilitated, and the middle guide unit 310 and the side guide unit 320 may be more firmly joined.

The middle guide unit 310 may be provided with a recess 313. The recess 313 may be formed to be recessed from the end of the middle guide unit 310 toward the side guide unit 320, and may receive the head H of the second bolt B2. In the case where the middle guide unit 310 has the recess 313, the rigidity of the middle guide unit 310 may be further reinforced.

The middle guide unit 310 may have a bent portion 314. The bent portion 314 may be formed to be bent from the end of the middle guide unit 310. For example, the bent portion 314 may be formed to be bent in the Z direction from both ends of the middle guide unit 310 along the X direction. In the case where the middle guide unit 310 has the bent portion 314, the rigidity of the middle guide unit 310 may be further reinforced. The bent portion 314 may be received in the forming portion 321 of the side guide unit 320. The second bolt B2 may sequentially pass through the bent portion 314 and the side guide unit 320. The recess 313 may be formed in the bent portion 314.

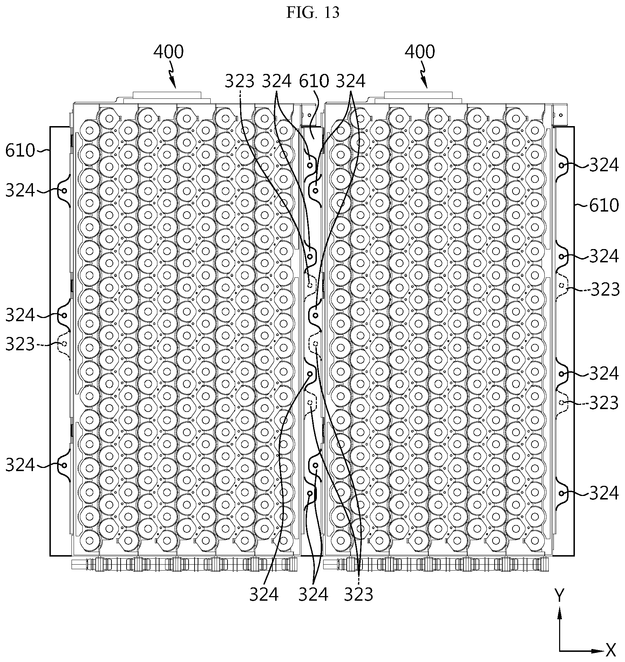

FIG. 13 is a plan view illustrating a cell array structure assembly coupled to a cross-beam in a battery pack according to an embodiment of the present disclosure.

Hereinafter, a battery pack 10 according to an embodiment of the present disclosure will be described in more detail with reference to FIGS. 1, 2, and 13. The battery pack 10 according to an embodiment of the present disclosure may further include a pack case 600.

The pack case 600 may be configured to store the cell array structure assembly 400. A storage space S for receiving the cell array structure assembly 400 may be formed inside the pack case 600. A plurality of cell array structure assemblies 400 may be stored in the storage space S.

A cross-beam 610 may be coupled to the pack case 600. The cross-beam 610 may be configured to be coupled to the pack case 600 to partition the storage space S of the pack case 600. The cross-beam 610 may be disposed across the storage space S. For example, the cross-beam 610 may be disposed to extend in the Y direction inside the pack case 600. By the cross-beam 610, the overall rigidity of the battery pack 10 may be increased. A plurality of cross-beams 610 may be coupled to the pack case 600. For example, as shown in the drawing, a plurality of cross-beams 610 may be disposed at the center and the outer side of the storage space S, respectively. In this case, the cell array structure assembly 400 may be disposed between any two cross-beams 610.

The side guide unit 320 may be coupled to the cross-beam 610. As the side guide unit 320 is coupled to the cross-beam 610, the cell array structure assembly 400 may be coupled to the cross-beam 610. As described above, the cross-beam 610 may increase the rigidity of the battery pack 10, and the side guide unit 320 of the cell array structure assembly 400 may be coupled to the cross-beam 610, so that when the side guide unit 320 is coupled to the cross-beam 610, the rigidity of the battery pack 10 may be further strengthened.

The side guide unit 320 may have a first mounting bracket 323 and a second mounting bracket 324. The first mounting bracket 323 may be coupled to the cross-beam 610 and disposed on the side of the first cell array structure 100. For example, the first mounting bracket 323 may be coupled to the cross-beam 610 on the side facing the +Z direction.

The second mounting bracket 324 may be configured to be coupled to the cross-beam 610 and disposed on the side of the second cell array structure 200. For example, the second mounting bracket 324 may be coupled to the cross-beam 610 in the -Z direction.

The first mounting bracket 323 and the second mounting bracket 324 may be disposed to be staggered from each other when viewed from the stacking direction of the first cell array structure 100 and the second cell array structure 200. For example, the first mounting bracket 323 and the second mounting bracket 324 may be disposed to be staggered from each other when viewed from the Z direction. In the case where the side guide unit 320 having the first mounting bracket 323 and the second mounting bracket 324 is coupled to the cross-beam 610 as described above, the torsional rigidity of the battery pack 10 may be increased.

Two cell array structure assemblies 400 may be coupled to one cross-beam 610, such as the cross-beam 610 disposed between two cell array structure assemblies 400 in FIG. 13. In this case, the first mounting bracket 323 and the second mounting bracket 324 of one cell array structure in the cross-beam 610 may be alternately disposed with the first mounting bracket 323 and the second mounting bracket 324 of the other cell array structure, respectively. In this case, the space efficiency of the battery pack 10 may be increased while maintaining the rigidity of the battery pack 10.

The first mounting bracket 323 and the second mounting bracket 324 may be formed to extend from the bent edge 322 of the side guide unit 320, respectively.

The pack case 600 may include a bottom plate 620. The bottom plate 620 may be disposed at the bottom of the cell array structure assembly 400. The bottom plate 620 may form a bottom of the pack case 600 therein. The pack case 600 may include a side wall 630. The side wall 630 may surround the bottom plate 620, and a storage space S may be formed inside the side wall 630 and the bottom plate 620. The pack case 600 may include a pack lid 640. The pack lid 640 may be coupled to the top of the side wall 630 to cover the storage space S.

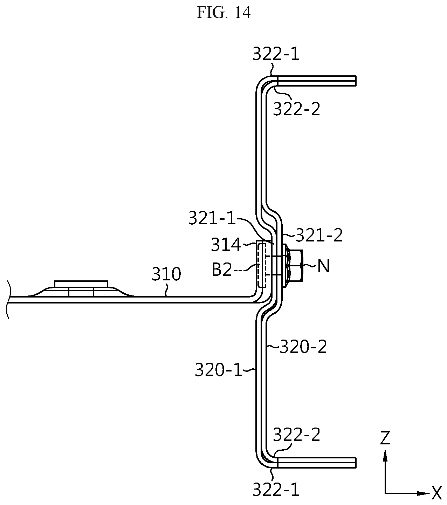

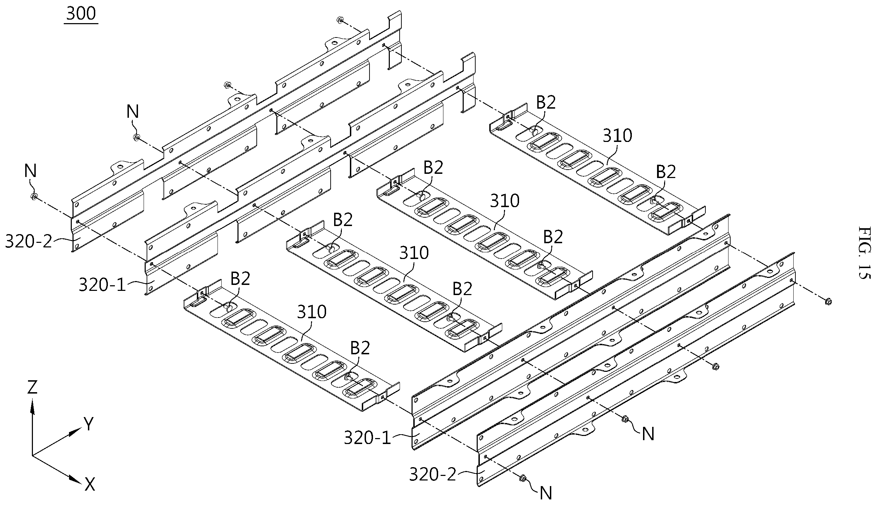

FIG. 14 is an enlarged front view illustrating a portion of a stacking guide unit in a battery pack according to another embodiment of the present disclosure, and FIG. 15 is an enlarged perspective view illustrating a stacking guide unit in a battery pack according to another embodiment of the present disclosure.

Hereinafter, with reference to FIGS. 14 and 15, a battery pack 10 according to another embodiment of the present disclosure will be described in detail.

In the battery pack 10 according to another embodiment of the present disclosure, a side guide unit 320 may include a first side guide unit 320-1 and a second side guide unit 320-2. The first side guide unit 320-1 may be configured to be disposed to the side of the middle guide unit 310. The second side guide unit 320-2 may be configured to be stacked on the first side guide unit 320-1 on the opposite side of the middle guide unit 310 relative to the first side guide unit 320-1. The first side guide unit 320-1 may be disposed inward, facing the middle guide unit 310, and the second side guide unit 320-2 may be disposed outward.

The first side guide unit 320-1 may have the same configuration as the side guide unit 320 according to an embodiment of the present disclosure. The second side guide unit 320-2 may be configured to be stacked on the outer side of the first side guide unit 320-1. That is, the side guide unit 320 according to another embodiment of the present disclosure may be configured such that the second side guide unit 320-2 is stacked on the first side guide unit 320-1 that is identical to the side guide unit 320 according to an embodiment of the present disclosure.

Since the side guide unit 320 is configured by stacking the first side guide unit 320-1 and the second side guide unit 320-2, the rigidity of the side guide unit 320 or the stacking guide unit 300 of the battery pack 10 according to another embodiment of the present disclosure may be further strengthened.

Both the first side guide unit 320-1 and the second side guide unit 320-2 may be bolted to the middle guide unit 310. For example, both the first side guide unit 320-1 and the second side guide unit 320-2 may be bolted to the middle guide unit 310 by the second bolt B2 and nut N.

The first side guide unit 320-1 may have a first forming portion 321-1, and the second side guide unit 320-2 may have a second forming portion 321-2. The first forming portion 321-1 may extend to be recessed to receive an end of the middle guide unit 310 and may be configured in the same manner as the forming portion 321 of the side guide unit 320 according to an embodiment of the present disclosure. The second forming portion 321-2 may extend to be recessed to receive the first forming portion 321-1.

The inner portion of the second forming portion 321-2 may be formed to be slightly larger than the outer portion of the first forming portion 321-1. That is, the inner portion of the second forming portion 321-2 may receive the outer portion of the first forming portion 321-1. In this case, when the first side guide unit 320-1 and the second side guide unit 320-2 are stacked on each other, the first side guide unit 320-1 and the second side guide unit 320-2 may be aligned more easily, so that the assembling efficiency of the battery pack 10 may be improved.

The first side guide unit 320-1 may have a first bent edge 322-1. The first bent edge 322-1 may be configured to be identical to the bent edge 322 of the side guide unit 320 according to an embodiment of the present disclosure. In addition, the second side guide unit 320-2 may have a second bent edge 322-2. The second bent edge 322-2, like the first bent edge 322-1, may be formed to be bent outward from at least one of both ends of the second side guide unit 320-2.

Referring back to FIG. 5 and FIG. 9, the first cell array structure 100 and the second cell array structure 200 may further include a cooling unit 140. The cooling unit 140 may be configured to cool the plurality of battery cells 110, and may be provided in contact with the sides of the battery cells 110. The cooling unit 140 may be disposed between two adjacent battery cell 110 rows to extend in one direction so as to come into contact with the sides of the battery cells 110 belonging to each battery cell 110 row. For example, the cooling unit 140 may be configured to extend along the Y direction. The cooling unit 140 may be disposed to be spaced apart from the side structure 120.

The battery pack 10 according to the present disclosure may further include, although not shown, various devices for controlling the charging and discharging of the battery cells 100, such as a BMS (Battery Management System), a current sensor, a fuse, and the like.

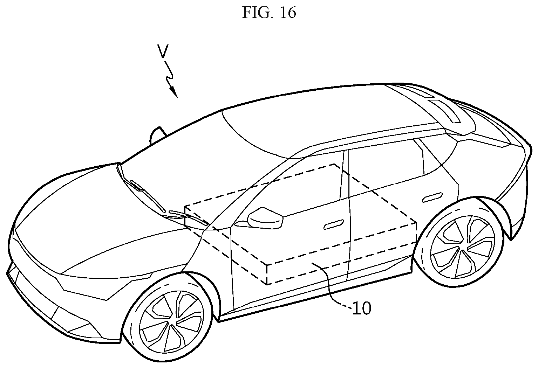

FIG. 16 is a drawing illustrating a vehicle according to an embodiment of the present disclosure.

Hereinafter, referring to FIG. 16, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in a body frame under the vehicle seat or in a trunk space. In addition, the vehicle V according to an embodiment of the present disclosure may further include various other components included in the vehicle, in addition to the battery pack 10. For example, the vehicle V according to an embodiment of the present disclosure may further include a vehicle body, a motor, a control device such as an ECU (electronic control unit), and the like, in addition to the battery pack 10 according to an embodiment of the present disclosure.

In addition, the battery pack 10 according to an embodiment of the present disclosure may also be provided in other devices, apparatuses, and facilities such as an energy storage system using a secondary battery, in addition to the vehicle V.

Although terms indicating directions such as up, down, left, right, front, and back are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of symbols]

10: battery pack
100: first cell array structure
110: battery cell
120: side structure
130: side wall
140: cooling unit
200: second cell array structure
300: stacking guide unit
310: middle guide unit
311: protrusion
312: through-hole
313: recess
314: bent portion
320: side guide unit
321: forming portion
322: bent edge
323: first mounting bracket
324: second mounting bracket
320-1: first side guide unit
321-1: first forming portion
322-1: first bent edge
320-2: second side guide unit
321-2: second forming portion
322-2: second bent edge
400: cell array structure assembly
500: insulating member
600: pack case
610: cross-beam
620: bottom plate
630: side wall
640: pack lid
P: pad
VS: venting space
B1: first bolt
B2: second bolt
N: nut
BT: male thread
H: head
S: storage space
V: vehicle

## Claims

1. A battery pack comprising:
a first cell array structure having a plurality of battery cells;
a second cell array structure stacked on one side of the first cell array structure and having a plurality of battery cells; and
a stacking guide unit configured to guide a stacking structure of the first cell array structure and the second cell array structure,
wherein the stacking guide unit comprises:
a middle guide unit disposed between the first cell array structure and the second cell array structure; and
a side guide unit configured to at least partially cover sides of the first cell array structure and the second cell array structure and connected to the middle guide unit.

2. The battery pack according to claim 1,
wherein a plurality of middle guide units are provided.

3. The battery pack according to claim 1,
wherein the middle guide unit
has at least one protrusion protruding toward the second cell array structure so as to support the second cell array structure.

4. The battery pack according to claim 3,
wherein the second cell array structure
comprises at least one side structure configured to support and store the plurality of battery cells, and
wherein the protrusion
supports the side structure.

5. The battery pack according to claim 3,
further comprising a pad disposed between the protrusion and the second cell array structure.

6. The battery pack according to claim 3,
wherein the second cell array structure and the first cell array structure are spaced apart from each other by the middle guide unit to form a venting space.

7. The battery pack according to claim 1,
wherein the middle guide unit has at least one through-hole open toward the first cell array structure and the second cell array structure.

8. The battery pack according to claim 1,
wherein the middle guide unit comprises:
at least one protrusion protruding toward the second cell array structure to support the second cell array structure; and
at least one through-hole open toward the first cell array structure and the second cell array structure, and
wherein the protrusion and the through-hole
are disposed alternately with each other.

9. The battery pack according to claim 8,
further comprising an insulating member disposed between the first cell array structure and the middle guide unit.

10. The battery pack according to claim 1,
wherein the side guide unit
is bolted to the first cell array structure and the second cell array structure by a first bolt.

11. The battery pack according to claim 1,
wherein the side guide unit
extends in a direction perpendicular to a stacking direction of the first cell array structure and the second cell array structure, and
wherein the side guide unit
has a forming portion extending along a longitudinal direction of the side guide unit to be recessed so as to receive at least an end of the middle guide unit.

12. The battery pack according to claim 1,
wherein the middle guide unit and the side guide unit are bolted to each other by a second bolt.

13. The battery pack according to claim 12,
wherein the second bolt is a weld bolt welded to the middle guide unit.

14. The battery pack according to claim 1, further comprising:
a pack case having a storage space formed to store the first cell array structure, the second cell array structure, and the stacking guide unit; and
a cross-beam coupled to the pack case so as to partition the storage space,
wherein the side guide unit is coupled to the cross-beam.

15. The battery pack according to claim 14,
wherein the side guide unit comprises:
a first mounting bracket coupled to the cross-beam and disposed to a side of the first cell array structure; and
a second mounting bracket coupled to the cross-beam and disposed to a side of the second cell array structure, and
wherein the first mounting bracket and the second mounting bracket are disposed to be staggered when viewed from a stacking direction of the first cell array structure and the second cell array structure.

16. The battery pack according to claim 1,
wherein the side guide unit comprises:
a first side guide unit disposed to a side of the middle guide unit; and
a second side guide unit stacked on the first side guide unit on the opposite side of the middle guide unit relative to the first side guide unit.

17. A vehicle comprising at least one battery pack according to any one of claims 1 to 16.
